# EUROPEAN PATENT SPECIFICATION

(11) **EP 1 343 114 B1**
(45) Date of publication and mention of the grant of the patent: **23.08.2006**
(21) Application number: 03003926.7
(22) Date of filing: 21.02.2003
(51) Int. Cl.: G06K 17/00, G06K 13/08, G06K 7/00

(54) **Card handling device with a card recycling device**
Vorrichtung zum Bearbeiten von Karten mit Vorrichtung zum Recycling
Dispositif de traitement et de recyclage de cartes

(30) Priority: 04.03.2002 JP 2002057148
(43) Date of publication of application: 10.09.2003
(73) Proprietor: ASAHI SEIKO KABUSHIKI KAISHA, Tokyo 107-0062 (JP)
(72) Inventor: Abe, Hiroshi, Iwatsuki-shi, Saitama-ken (JP); Enomoto, Minoru, Iwatsuki-shi, Saitama-ken (JP)
(74) Representative: Hofer, Dorothea

(56) References cited:
- FR-A- 2 743 435
- US-A- 4 864 114
- US-A- 5 397 886

## Description

This invention relates to the improvement of a card handling device cooperating with a card recycling device.
Especially, this invention relates to an improvement of the card handling device cooperating with the card recycling device which can handle a magnetic card and an IC card.
More especially, this invention relates to an improvement of the card handling device with the card recycling device which can handle a magnetic tape on the obverse side and the reverse side or an IC card which is either a contact type or a non-contact type.

This applicant applied for a handling device for handling a magnetic card and an IC card in application number 10-378148 (it is known as the Japanese laid open patent JP 2000 182 000 A).
The invention comprises a card slot, a magnetic card handling device, an IC card handling device and a card storing device, and can handle the magnetic card and the IC card.
Also, the guide of the magnetic card handling device pivots, the card is slanted, and naturally slide down. Also, the cards can be recycled.

In the art, the card pivots by the magnetic card handling device at a predetermined angle.
More specifically, a part of the magnetic card handling device pivots on a rotating shaft of a driver of the card transporting device.
Therefore the card is slanted and is naturally slide down. This structure is compact, because the card handling device and the card recycling device are in one body.

However, the structure is complex and has no advantage concerning maintenance and assembly because the rotating shaft uses both as the driver of the transporting device and the shaft of magnetic handling device.
Also, the magnetic card occurs in two types JIS-1 type (JIS-X-6302-1) and JIS-2 type (JIS-X-6302-2).
The JIS-1 type has a magnetic tape on the reverse side, the JIS-2 type has a magnetic tape on the obverse side.
The card handling device has both types.

The magnetic heads for reading and writing are located facing the magnetic tapes and can have contact with the tapes.
These heads can be dislocated to the direction of the movement.
The structure becomes larger because the transporting passageway becomes longer.
Therefore the heads are located opposed and have contact with the ends of each other.
In this structure, the card doesn't drop because it is held between the heads.

Therefore one of the heads moves, and the card is released. If the two heads meet damage is done.
Also, the card handling device is smaller because it is built in a ticket vending machine etc.

Document US-A-4864114 discloses a card handling device according to the preamble of claim 1 in the form of a hybrid card reader for magnetic cards and IC-cards. The magnetic and IC-card readers are aligned along a transport passageway. The IC-card handling device can pivot and thus move in variable ways on the transporting passageway.

Further, document US-A-5397886 discloses a motorized card reader/encoder mechanism. This mechanism includes a generally rotatable guide assembly having a card path for receiving and transporting a card for read/encode operation, and optionally, a generally fixed throat assembly for directing a card to the card guide assembly. The guide assembly is rotatable between a plurality of positions including a card transfer position wherein the guide assembly is in general adjacently aligned with the throat assembly, a card read/encode position wherein the guide assembly is in a rotated position not in a substantial alignment with a throat assembly, and a card rotation position wherein the guide assembly card part is oriented generally vertical in order to transfer a card to a card bin.

From the document FR-A-2743435 a further card handling device is known comprising a card receiving device and a card handling device also for IC-cards. The handling device is also in a position to pivot in order to cross obtusely the transporting passageway of the card.

The first object of the present invention is to provide a card handling device with a card recycling device which has advantages with respect to the maintenance and assembly of the device.
The second object of the present invention is to provide a card handling device with a card recycling device which can read and memorize the magnetic tape on the obverse side and the reverse side of the cards.
The third object of the present invention is to provide a card handling device with a card recycling device on a smaller scale.

The object of the invention is achieved by the features of claim 1. Further developments are the subject-matters of the dependent claim.

According to an aspect of the invention a card handling device with a card recycling device is provided which has a card receiving device 10, a magnetic card handling device and an IC card handling device which are aligned along a transporting passageway, whereby the IC card handling device can move out of the transporting passageway.

In this structure, the IC card handling device is moved out of the transporting passageway, and the card is transported to the card recycling device by the transporting device.
The transporting device and moving device aren't integrated, therefore the structure is simple.
When the magnetic heads are located opposed, the IC cards are recycled at the IC card handling device.
Therefore the cards naturally drop down, and the device is inexpensive.

The present invention is desirable because the IC card handling device can pivot at the rear end of opposite of the magnetic card handling device.
In this structure, the cards are transported from the magnetic handling device and are diverted from the transporting passageway to the recycling section at the IC card handling device.
Therefore the device becomes smaller because the IC card handling device and the card recycling device are located in the same space.

The positioning of the IC card handling device is easy because the IC card handling device pivots.
In other words, the end of the IC card handling device is located at the pivoting section.
Also, the moving device becomes smaller and less expensive because it moves part of the IC card handling device.

This invention is desirable because a guiding plate is attached at the rear of the IC card handling device, when the IC card handling device pivots, it crosses obtusely to the transporting passageway of the card.
In this structure, the end of card which is transported by the transporting device is guided by the guiding plate and is forcibly diverted from the transporting passageway.
Therefore the recycling section becomes smaller.
In other words, the card handling device becomes smaller.

This invention is desirable because a bending section is continued to the guiding plate and crosses to the transporting passageway and the cross-angle is larger than the guiding plate.
In this structure, the cards are diverted from the transporting passageway by the guiding plate.
The cards are guided by the bend section which is the cross-angle which is larger than the guiding plate.
The cards are furthermore forcibly diverted from the transporting passageway.
The card handling device becomes smaller because the distance for diverting can be shortened.

This invention is desirable because the transporting device includes a first transporting device which is located between the card receiving device and the magnetic card handling device, and because of a second transporting device which is located between the magnetic card handling device and the IC card handling device.
In this structure, the card handling device becomes smaller and less expensive because there are transporting devices.

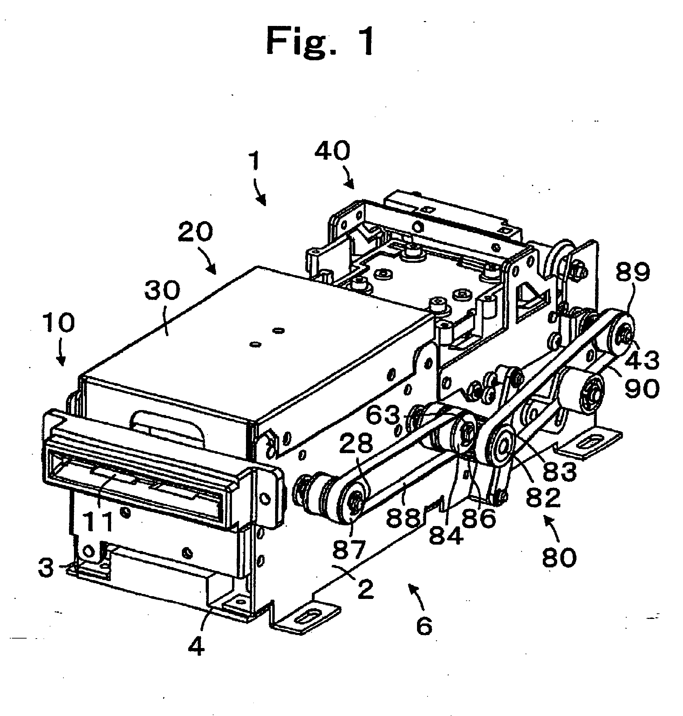

Fig. 1 is a perspective view of the card handling device of the embodiment.

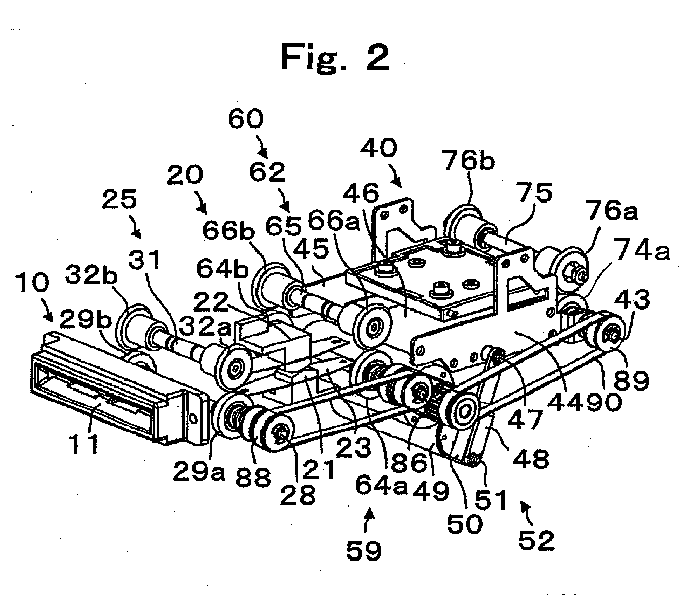

Fig. 2 is a perspective view of the principal part of the embodiment.
Fig. 3 is a cross-section view of the card handling device of the embodiment.
Fig. 4 is an explaining cross-section view the card handling device of the embodiment.

In this embodiment, a card moves horizontally, however the moving direction isn't limited to horizontally.
The card handling device 1 includes a card receiving device 10, a magnetic card handling device 20, an IC card handling device 40 and a card transporting device 59.
The card handling device 1 has a frame 6 which includes side frames 2 and 3 which are located between a predetermined distance and stays 4 and 5 which are connected to the side frames.
The card receiving device 10, magnetic card handling device 20 and IC card handling device 40 are located along card transporting passageway 7.
Card receiving device 10 has a card slot 11 which is rectangle and sideways.

The magnetic card handling device 20 includes a first magnetic head which uses JIS-1 type card and a second magnetic head which uses JIS-2 type card.
A first magnetic head 21 can read and memorize the magnetic tape and is fixed in the middle of a leaf spring 23.
One end of the leaf spring 23 is fixed at a bracket (not shown) and the other end can slide on the bracket.
The leaf spring 23 is located below the transporting passageway 7 and is extended along the transporting passageway 7.
An arc end of the magnetic head 21 is slightly across from the transporting passageway 7.
A second magnetic head 22 can read and memorize the magnetic tape and is fixed in the middle of the leaf spring 23 as the same as the first magnetic head 21 and is located over the transporting passageway 7 and is opposed to the first magnetic head 21.

Therefore the arc end of the second magnetic head 22 slightly crosses over the transporting passageway 7.
As a result, the arc head of first magnetic head 21 and the arc heads of second magnetic head 22 are slightly out of alignment and have contact with each other.
The magnetic handling device 20 includes either the first magnetic head 21 or the second magnetic head 22.
But when it includes both head, it can handle all types of cards.
First magnetic head 21 and second magnetic head 22 can be changed to only one reading type.

First transporting device 25 is located between receiving device 10 and first magnetic head 21 and second magnetic head 22.
First transporting device 25 includes first driving roller 26 which is located below transporting passageway 7 and first pressing roller 27 which is located over transporting passageway 7.
First driving roller 26 includes first rotating shaft 28 which can rotate at side frames 2 and 3 and rollers 29A, 29B which are fixed on both ends of first rotating shaft 28.

Rollers 29A and 29B are structured by a body and a ring. The body is made up of resin or metal, and the ring is made up of rubber, and the body is covered by the ring.
Because magnetic cards and IC cards have the same size but the thickness is different, the rubber on the rings can be changed to fit either thickness of the cards.
A first pressing roller 27 can be supported resiliently, as a result the cards of different thickness can be handled.

The first pressing roller 27 includes a shaft 31 which is fixed at a supporting box 30 and rollers 32A and 32B which are attached and rotate at the end of shaft 31.
The structures of rollers 32A and 32B are as the same as rollers 29A and 29B.
Roller 32A is located over roller 29A and is away from the surface of the roller 29A, and the distance is thinner than most thin cards.
Roller 32B is located over roller 29B and is away from the surface of the roller 29B, and the distance is thinner than most thin cards.

In other words, the first driving roller 26 and the first pressing roller 27 are located opposite on either side of the passageway 7.
The first pressing roller 27 can have contact with first driving roller 26.
In this situation, the card doesn't receive damage because the ring is changed to fit its shape.
A supporting box 30 is detachable between side frames 2 and 3.
The first magnetic head 22 is attached at the supporting box 30.

Next, the IC card handling device 40 is explained.
The IC card handling device 40 includes a card guide 41 has a reading and memorizing device 42.
The card guiding device 41 is channel like in shape and is structured by a pair of plates 44 and 45 which pivot on a third rotating shaft 43 and are fixed at the side wall of a base board 46.
The channel section is extended along the card transporting passageway 7.
The base board 46 is located slightly below the transporting passageway 7.
The end of a rod 48 pivots on a pin 47 which is fixed at a plate 44.

The another end of the rod 48 can pivot on a shaft 51 of a crank 50 which is fixed to the output shaft of a motor 49 with gears.
A moving device 52 of the card guiding device 41 includes a pin 47, a rod 48, a motor 49 with a gear, a crank 50 and a shaft 51.
In other words, the moving device 52 is the moving device of the IC card handling device 40.

The function of the moving device 52 is to move the IC card handling device 40 away from the transporting passageway 7. Therefore, the moving device 52 can be changed to an air cylinder or linear motor.
The IC card handling device 40 can be moved parallel to the transporting passageway 7.
A communication device 53 for non-contact type of IC card is fixed at the rear of the base 46.

The communication device 53 is an antenna and is thin.
The contactor 55 of contact type IC card is fixed at a moving plate 54 which is located above the base 46.
A moving plate 54 can move along the guiding passageway 7.

The moving plate 54 can be located away from the transporting passageway 7 at a predetermined distance and the side of the magnetic card handling device 20.
The moving plate 54 is urged towards the side of the magnetic card handling device 50 by a spring (not shown) and is stopped by a stopper (not shown) at the horizontal section of a guiding groove 56.

A projection 57 is fixed at the end of the moving plate 54 opposite of the magnetic card handling device 20.
The side of the magnetic card handling device 20 side of the projection 57 crosses orthogonal to the card transporting passageway 7.
A slanting surface 57B opposite to a side 57A of the projection 57 can move across the transporting passageway 7.
The reading and memorizing device 42 can handle either contact or non-contact type.

A second transporting device 60 is located between the magnetic card handling device 20 and the IC card handling device 40.
The second transporting device 60 includes a second driving roller 61 which is located below the transporting passageway 7 and a second pressing roller 62 which is located above the transporting passageway 7.
A second driving roller 61 includes rollers 64A and 64B which are as the same as rollers 29A and 29B and are fixed on the second rotating shaft 63 .

The second rotating shaft 63 is supported at side frames 2 and 3 and is rotatable.
The second pressing roller 62 includes rollers 66A and 66B which are rotatable on a shaft 65.
The structure of rollers 66A and 66B are as the same as rollers 32A and 32B.
The shaft 65 is attached at a supporting box 30.
A guiding board 67 is located above and below the transporting passageway 7 between the card receiving device 10 and the second transporting device 60.

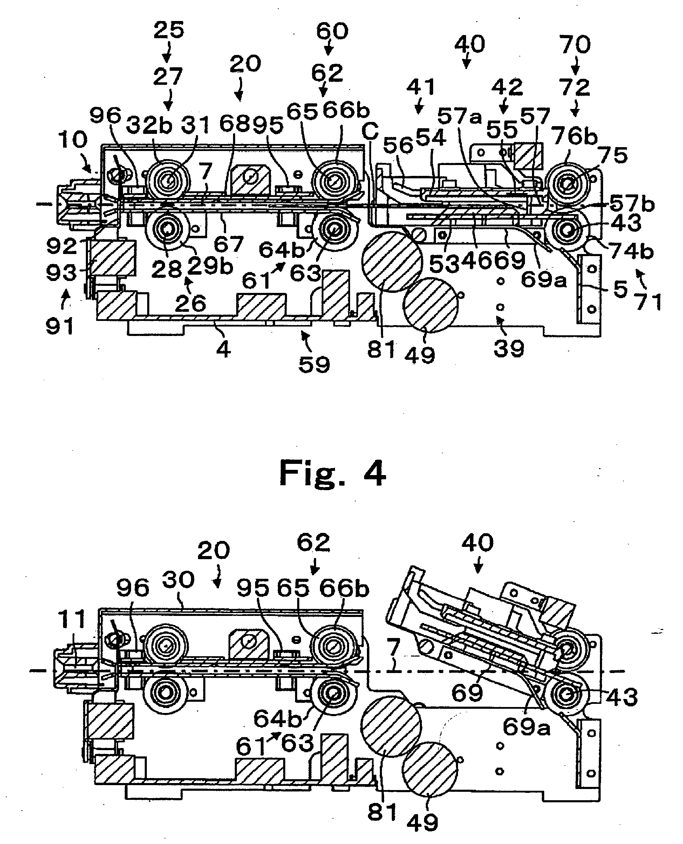

A guiding plate 69 is fixed at the under section of plates 44 and 45 which are located below the transporting passageway 7. A bend section 69A is shaped continuously with a guiding plate 69 and is bent obtusely to the guiding plate 69.
When the IC card handling device 40 pivots at the third rotating shaft 43, the guiding plate 69 crosses to the transporting passageway 7 (shown in figure 4).
Therefore, the guiding plate 69 crosses obtusely to the transporting passageway 7.

The extending line of the bend section 69A crosses obtusely the transporting passageway 7 and the cross-angle is larger than the guiding plate 69.
A recycling section 39 is the space which is located below the IC card handling device 40 and is parallel to the IC card handling device 40.
In this structure, the length of the card transporting direction becomes shorter.
A third transporting device 70 is located at the IC card handling device 40 of the opposite side of the magnetic card handling device 20.

The structure of the third transporting device 70 is as the same as the first transporting device 25 and the second transporting device 60.
The third transporting device 70 includes a third driving roller 71 which is located below the transporting passageway 7 and a third pressing roller 72 which is located above the transporting passageway 7.
The third driving roller 71 comprises rollers 74A and 74B which are fixed at the third rotating shaft 43.
The third rotating shaft 43 is supported at side frames 2 and 3 and is rotatable.
The third pressing roller 72 includes rollers 76A and 76B which are rotatable on a shaft 75.
The Rollers 76A and 76B are made of the same structure as rollers 32A and 32B.
The shaft 75 is attached at side frames 2 and 3.

The distance between the first transporting device 25 and the second transporting device 60 is that the card is held by both devices.
The distance between the second transporting device 60 and the third transporting device 70 is that when the card is held by the second driving roller 61 and the second pressing roller 62, shortly after it passes through the third driving roller 71 and the third pressing roller 72.

When a new card is dispensed to the card slot 11, a card let off device is mounted at right side of the third transporting device 70.
When a new card isn't let off, the third transporting device 70 doesn't attach.
As a result, the shaft 43 is only located.
The transporting device 59 includes the first transporting device 25 and the second transporting device 60.
When a new card is dispensed, the transporting device 59 includes the third transporting device 70.
The function of the transporting device 59 is to transport the card to a predetermined direction.
Therefore the transporting device 59 can be changed to another type.

Next, a driving device 80 of the first transporting device 25, the second transporting device 60 and the third transporting device 70 is explained.
A timing pulley 83 is fixed on an output shaft 82 of a motor 81 with a gear which is located below the transporting passageway 7 between the second transporting device 60 and the IC card handling device 40.

The timing belt 86 belts timing pulley 83 and a timing pulley 84 which is fixed on the second rotating shaft 63.
A timing belt 88 belts the timing pulley 84 and a timing pulley 87 which is fixed on the second rotating shaft 28.

A timing belt 90 belts the timing pulley 83 and a timing pulley 89 which is fixed on the third rotating shaft 43.
The first driving roller 26, the second driving roller 61 and the third driving roller 71 rotate synchronously and at the same speed because the timing pulleys 83, 84, 87 and 89 are at the same diameter.
The driving device 80 can be changed to another type which rotates the transporting device 59 at the same speed.

A shutter device 91 includes a plate 92 which is located between the card receiving device 10 and the first transporting device 25 and a solenoid 93 which moves the plate 92.
When the card handling device 1 is an active, plate 92 is located outside of the transporting passageway 7.
The card is inserted, after, when a second sensor 95 which is located between the first transporting device 25 and the second transporting device 60 gets a non-detection situation, the plate 92 protrudes into the transporting passageway 7.

When the second sensor 95 detects the card again, the plate 92 is moved and goes out of the transporting passageway 7.
A first sensor 96 is located between the shutter device 91 and the first transporting device 25.
The first sensor 96 and the second sensor 95 are a photoelectrical type in the embodiment but it can be changed to another type.

Next the operating is explained.
Firstly the handling of a magnetic card is explained.
When the card handling device 1 is active and a card isn't inserted, the plate 92 is located outside the transporting passageway 7.
When a card C is inserted into the card slot 11 and is moved to the transporting passageway 7, it is detected by the first sensor 96.
By this detecting, the motor 81 rotates and the first transporting device 25, the second transporting device 60 and the third transporting device 70 are operated through the driving device 80.

Therefore the first driving roller 26, the second driving roller 61 and the third driving roller 71 rotate in the clockwise direction shown in figure 3.
Card C is held by the first driving roller 26 and the first pressing roller 27 and is transported towards the right.
In this moving process, card C moves between the first magnetic head 21 and the second magnetic head 22 and moves between the second driving roller 61 and the second pressing roller 62.
The first magnetic head 21 reads the data on JIS-1 type.
The second magnetic head 22 reads the data on JIS-2 type.

Card C is further transported in the right direction by the second transporting device 60.
The end of card C arrives in the reading and writing device 42.
When the first sensor 96 becomes non-detecting situation of card C, plate 92 is moved into the transporting passageway 7 by the solenoid 93.
Therefore theft is prevented.

The end of card C has contact with the end face 57A of the projection 57, and the moving plate 54 is moved towards the right by card C.
When the rear end of card C passes through the second sensor 95, the second sensor 95 becomes a non-detection situation of card C.
The motor 81 is stopped based on the non-detection signal.

In this situation, the moving plate 54 moves to the standby position by card C (shown in solid line).
The end section of card C is held by the second driving roller 61 and the second pressing roller 62.
In this standby situation of card C, a main device handles a predetermined operation, afterwards it outputs a returning signal.

The motor 81 is reversed based on the returning signal, and the first driving roller 26, the second driving roller 61 and the third driving roller 71 rotate in the counter clockwise direction through the driving device 80.
Therefore, card C is transported towards the card slot 11 by the second transporting device 60.
On the way, card C moves between the first magnetic head 21 and the second magnetic head 22 and is held by the first transporting device 25 and is transported to the side of card slot 11.

In this process, either the first magnetic head 21 or the second magnetic head 22 writes on card C.
When the first sensor 96 detects the end of card C, the solenoid 93 is excited, and the plate 92 is moved to the outside of the transporting passageway 7.
Also card C is transported towards the card slot 11.
Card C is drawn out from the card slot 11, and when the first sensor 96 becomes at a non-detection situation, the motor 81 is stopped.

Next, the case of an IC card is explained.
Card C is inserted into the card slot 11 and is transported towards the right along the transporting passageway 7 by the first transporting passageway 25 and the second transporting passageway 7.
Therefore the moving plate 54 is kept at the standby position.
In this situation, a contactor of non-contact type IC card has contact with the contactor 55.
When contact type IC card is used, it memorizes the data by the communication device 53.

In this situation, the IC card is handled for memorizing or reading.
Afterwards the returning signal is outputted.
The motor 81 is reversed based on the signal, and the first driving device 26, the second driving roller 61 and the third driving roller 71 rotates in the counter clockwise direction through the driving device 80.
Therefore the card is transported towards the card slot 11 by the first transporting device 25 and the second transporting device 60.

Next, recycling of the card is explained.
The process is executed after that card C reaches at the standby position.
When the recycling signal is outputted from main device, the motor 81 is reversed.
Therefore card C is transported towards the card slot 11 by the second transporting device 60 and the first transporting device 25.
When the first sensor 96 detects card C, the motor 81 is stopped.

Next, the motor 49 rotates, the card guide 41 pivots in the clockwise direction on the third rotating shaft 43 as shown in figure 3 through the output shaft 51 together with a rotation of the crank 50, the rod 48 and the pin 47, and the card guide 41 rises as shown in figure 4.
In this situation, the plate 45 is detected by a sensor (not shown), and the sensor outputs a detecting signal.
The motor 49 is stopped based on the detecting signal. Therefore the guiding plate 69 slants across the transporting passageway 7.
In other words, the guiding plate 69 crosses obtusely into the transporting passageway 7.

Afterwards the motor 81 rotates, and card C is transported towards the right as shown in figure 3.
Therefore, card C is guided by the guiding plate 68 and slants to the right and falls down into the recycling section 39 to the outside of the second transporting device 60.

In this bout, card C is forcibly diverted downwards because the cross angle of the bend section 69A is larger.
The card naturally falls, however, the transporting section is short.
A storing device of cards is located at the recycling section 39 (not shown).

A predetermined time is clocked over card C falling time, afterwards the motor 81 is stopped.
Next, the motor 79 rotates, the output shaft 51 moves downwards together with the rotation of the crank 50.
On the other hand, the IC card handling device 40 rotates in the counter clockwise direction and becomes level as shown in figure 3 and is detected by a sensor (not shown), and the motor 49 is stopped.

Next, a new card being dispensed is explained.

Firstly a magnetic card is explained.
A new card is transported from a card storing section (not shown) which is located at the right side of the third transporting device 70.
The new card is transported towards the card slot 11 by the third transporting device 70.
En route, the end of the new card pushes the slanting surface 57B.
The moving plate 54 moves along the transporting passageway 7. Afterwards, it is guided by a slanting section of the guiding groove 56 and is located away from the transporting passageway 7.

Therefore, the projection 57 is away from the transporting passageway 7, and the new card passes through under projection 57. Afterwards, it passes through the second transporting device 60 and the first transporting device 25 and is dispensed into the card slot 11.
When the first sensor 96 becomes non-detecting, the motor 81 is stopped, and dispensing of the new card finishes.
En route, the new card is memorized by the first magnetic head 21 or the second magnetic head 22.

Next, the case of a new IC card is explained.
A new IC card is transported towards the card slot 11 by the third transporting device 70, the second transporting device 60 and the first transporting device 25.
When the first sensor 96 detects the new IC card, the motor 81 is stopped, afterwards it rotates.
As has been previously described, the new IC card pushes the projection 57 and is kept at the standby position and memorized data, afterwards it is dispensed towards the card slot 11.

## Claims

1. A card handling device with a card recycling device, comprising a card receiving device (10), a magnetic card handling device (20) and an IC card handling device (40) aligned along a transporting passageway (7) in this order, wherein:
the IC card handling device (40) is pivotable for an acute angle at its rear end to move away from the transporting passageway (7), and wherein
a guiding plate (69) is fixed under the IC card handling device (40), which guiding plate (69) extends substantially in parallel to the transporting passageway (7) in a first state in which the IC card handling device (40) is not moved away from the transporting passageway (7), and which crosses the transporting passageway (7) in the direction of card insertion at said acute angle, for guiding an inserted card away from the transporting passageway (7), in a second state in which the IC card handling device (40) is moved away from the transporting passageway (7),
**characterised in that**
a bending section (69a) is continued from rear end of the guiding plate (69), which bending section (69a) is bent in such a way that it extends away from the transporting passageway (7) in both said first and second states.

2. The card handling device with a card recycling device claimed in claim 1, whereby
a transporting device (59) includes a first transporting device (25) which is located between the card receiving device (10) and the magnetic card handling device (20), and a second transporting device (60) which is located between the magnetic card handling device (20) and the IC card handling device (40).

## Patentansprüche

1. Kartenhandhabungsvorrichtung mit einer Kartenrückführungsvorrichtung, umfassend eine Kartenaufnahmevorrichtung (10), eine Magnetkarten-Handhabungsvorrichtung (20) und eine IC-Karten-Handhabungsvorrichtung (40), die entlang eines Transportweges (7) in dieser Reihenfolge ausgerichtet sind, wobei:
die IC-Karten-Handhabungsvorrichtung (40) um einen spitzen Winkel an ihrem hinteren Ende schwenkbar ist, um sich vom Transportweg (7) weg zu bewegen, und wobei
eine Führungsplatte (69) unter der IC-Karten-Handhabungsvorrichtung (40) angeordnet ist, in einem ersten Zustand, in dem die IC-Karten-Handhabungsvorrichtung (40) nicht vom Transportweg (7) weg bewegt ist, im Wesentlichen parallel zum Transportweg (7) erstreckt und wobei die Führungsplatte in einem zweiten Zustand, in dem die IC-Karten-Handhabungsvorrichtung (40) vom Transportweg (7) weg bewegt ist, den Transportweg (7) in der Richtung der Karteneinführung in dem spitzen Winkel kreuzt, um eine eingeführte Karte vom Transportweg (7) weg zu führen,
**dadurch gekennzeichnet, daß**
ein Biegeabschnitt (69a) vom hinteren Ende der Führungsplatte (69) fortgesetzt ist, wobei der Biegeabschnitt (69a) derart gebogen ist, daß er sich sowohl im ersten als auch im zweiten Zustand vom Transportweg (7) weg erstreckt.

2. Kartenhandhabungsvorrichtung mit einer Kartenrückführungsvorrichtung nach Anspruch 1, wobei
eine Transportvorrichtung (59) eine erste Transportvorrichtung (25), die sich zwischen der Kartenaufnahmevorrichtung (10) und der Magnetkarten-Handhabungsvorrichtung (20) befindet, und eine zweite Transportvorrichtung (60), die sich zwischen der Magnetkarten-Handhabungsvorrichtung (20) und der IC-Karten-Handhabungsvorrichtung (40) befindet, umfasst.

## Revendications

1. Dispositif de traitement de cartes avec un dispositif de recyclage de cartes, comprenant un dispositif de réception de cartes (10), un dispositif de traitement de cartes magnétiques (20), et un dispositif de traitement de cartes IC (40) alignés sur un passage de transport (7) dans cet ordre, dans lequel :
le dispositif de traitement de cartes IC (40) peut pivoter selon un angle aigu à son extrémité arrière pour s'écarter du passage de transport (7), et dans lequel
une plaque de guidage (69) est fixée sous le dispositif de traitement de cartes IC (40), laquelle plaque de guidage (69) s'étend substantiellement parallèlement au passage de transport (7) dans un premier état dans lequel le dispositif de traitement de cartes IC (40) n'est pas écarté du passage de transport (7), et qui croise le passage de transport (7) dans la direction d'insertion de la carte selon ledit angle aigu, pour guider une carte insérée à l'écart du passage de transport (7), dans un deuxième état dans lequel le dispositif de traitement de cartes IC (40) est écarté du passage de transport (7).
**caractérisé en ce que**
une section courbe (69a) est en prolongement de l'extrémité arrière de la plaque de guidage (69), laquelle section courbe (69a) est courbe de telle manière qu'elle s'étend à distance du passage de transport (7) dans les deux dits premier et deuxième états.

2. Dispositif de traitement de cartes avec un dispositif de recyclage de cartes selon la revendication 1, par quoi
un dispositif de transport (59) inclut un premier dispositif de transport (25), qui est situé entre le dispositif de réception de cartes (10) et le dispositif de traitement de cartes magnétiques (20), et un deuxième dispositif de transport (60) qui est situé entre le dispositif de traitement de cartes magnétiques (20) et le dispositif de traitement de cartes IC (40).
